# EUROPEAN PATENT APPLICATION

(11) **EP 1 548 629 A1**
(43) Date of publication of application: **29.06.2005**
(21) Application number: 04023107.8
(22) Date of filing: 28.09.2004
(51) Int. Cl.: G06F 17/60

(54) **Messenger service system and control method thereof, and messenger server and control program thereof**

(30) Priority: 26.12.2003 JP 2003435318; 30.07.2004 JP 2004224494
(71) Applicant: Dwango Co., Ltd., Tokyo 103-0007 (JP)
(72) Inventor: Okamoto, Yukifumi, c/o Dwango Co. Ltd., Tokyo 103-0007 (JP)
(74) Representative: Betten & Resch

(57) **Abstract**

There is provided a messenger service system capable of realizing a messenger service in which position information of a user is automatically opened and a burden of care is reduced. The messenger service system includes communication terminals, a messenger server and a database. The area data sets are stored in association with identification data in the database. Each data set includes predetermined area definition data and notation data. If position data and identification data are received from a communication terminal, the server searches for an area data set associated with identification data. If the area data set including a position to be represented by received position data is detected, the server transmits notation data in the area data set to other communication terminals. The communication terminals receive data and display. Thus, the user of a second communication terminal can grasp a position of a first communication terminal.

## Description

### BACKGROUND OF THE INVENTION

### Field of the Invention

The present invention relates to a technique for providing a messenger service with which multiple communication terminals can exchange messages with each other.

### Description of the Related Art

In JP-A-2003-58483, a system which provides a messenger service is disclosed. In this system, multiple users who are logged in to a messenger server can exchange messages with each other.

### SUMMARY OF THE INVENTION

Though an instant messenger service is known, when a contact accesses the messenger service, it is difficult to determine whether or not the contact is available to exchange messages. For example, when the contact is in meeting, the contact may be afraid to send or receive a personal message.

Here, it is an object of the present invention to realize a messenger service in which position information of a user is automatically opened, such that a burden of care is alleviated.

In an aspect, the present invention relates to a system for providing a messenger service. The system comprises multiple communication terminals, a messenger server transmitting message data, input to one communication terminal, to another communication terminal, and a first storage that stores an area data set, having definition data and notation data of a predetermined area, in association with identification data. The identification data may be an identification data assigned to a user of the messenger service, that is, a user ID. Each communication terminal comprises a position acquirer that acquires its own position data and a display that displays notation data when notation data of the area is received from the messenger server. The position acquirer may be a receiver which receives positioning data of the communication terminal from a satellite or a device which measures a position of the communication terminal by itself. If position data of a first communication terminal and a first identification data are received from the first communication terminal, the messenger server searches an area data set associated with the received first identification data. If the area data set, having definition data which includes a position to be represented by received position data, is detected, the messenger server transmits notation data of the area in the area data set to a second communication terminal.

In the messenger service system, notation data of the area including the position of the first communication terminal is displayed on the second communication terminal. Thus, the user of the second communication terminal can grasp the position of the first communication terminal. In such a manner, since position information of a contact is automatically opened, a burden of care of a user is reduced.

The first communication terminal may try to login to the messenger server using the first identification data, according to an instruction input to the first communication terminal, and, when the login is successful, acquire position data of the first communication terminal, and then, transmit acquired position data to the messenger server, together with the first identification data. In this case, if the first communication terminal logs in to the messenger server, notation data of the area including the position of the first communication terminal is displayed on the second communication terminal. Therefore, the user of the second communication terminal can grasp the position of the first communication terminal rapidly after the first communication terminal logs in.

If the area data set, having definition data which includes a position to be represented by received position data, is detected, the messenger server may transmit definition data in the area data set to the first communication terminal. The first communication terminal may repetitively acquire position data and, when position data representing a position outside the area to be defined by definition data received from the messenger server is acquired, transmit position data to the messenger server, together with the first identification data. In this case, according to the move of the first communication terminal outside the area, position data of the first communication terminal is transmitted to the messenger server. Thus, the move of the first communication terminal is reflected on notation data which is to be transmitted to the second communication terminal.

The messenger service system may further comprise a second storage that stores notation data of a user who operates a communication terminal, in association with the identification data. If the area data set, having definition data which includes the position to be represented by received position data, is detected, the messenger server may read user notation data associated with the first identification data, create data in which user notation data is added to area notation data in the detected area data set, and transmit created data to the second communication terminal. The second communication terminal may receive and display created data. In this case, data, including notations of the user of the first communication terminal and an area in which the first communication terminal, is positioned is displayed on the second communication terminal. For this reason, the user of the second communication terminal can grasp the position of the first communication terminal, and simultaneously specify easily who the user of the first communication terminal is.

Each communication terminal may transmit the area data set and the identification data to the server in response to an input of the area data set. The server may store the area data set received from the communication terminal in the first storage in association with the received identification data received from the same communication terminal. In this case, the user can register the area data set in the first storage using the communication terminal. Therefore, the user can specify the area and its notation data by oneself.

The messenger service system may further comprise a list storage that stores, in association with one identification data, at least one identification data list including at least one other identification data. Each communication terminal may try to login to the messenger service system using identification data, according to an instruction input to the communication terminal. The second communication terminal may be a communication terminal which logs in to the messenger service system using the identification data stored in the identification data list associated with the first identification data. If the area data set, having definition data which includes the position to be represented by position data, is detected, the messenger server may refer to the identification data list associated with the first identification data, read at least one identification data stored in the identification data list, and transmit notation data of the area in the detected area data set to the second communication terminal which logs in to the messenger server using the read identification data.

After detecting the area data set, the messenger server may transmit notation data of the area in the area data set to the second communication terminal, in response to polling by the second communication terminal. In this case, the messenger service system may further comprise a list storage that stores, in association with one identification data, at least one identification data list including at least one other identification data. The second communication terminal may transmit second identification data to the messenger server to perform the polling. The messenger server may search the identification data list associated with the second identification data for the first identification data, in response to the polling and, when the first identification data is detected, transmit notation data of the area to the second communication terminal.

In another aspect, the present invention relates to a messenger server. The messenger server is provided in a messenger service system, in which multiple communication terminals exchange messages with each other, and transmits message data, input to one communication terminal, to another communication terminal. The messenger service system further comprises a first storage that stores an area data set, having definition data and notation data of a predetermined area, in association with identification data. Each communication terminal comprises a position acquirer that acquires its own position data and a display that displays notation data when notation data of the area is received from the messenger server. The messenger server searches the area data set associated with received first identification data when position data of the first communication terminal and the first identification data are received from the first communication terminal. The message server also transmits notation data of the area in an area data set to the second communication terminal when the area data set, having definition data which includes the position to be represented by received position data, is detected.

In still another aspect, the present invention relates to a method of controlling a messenger service system. The messenger service system comprises multiple communication terminals, a messenger server transmitting message data, input to one communication terminal, to another communication terminal, and a first storage that stores an area data set, having definition data and notation data of a predetermined area,. Each communication terminal comprises a position acquirer that acquires its own position data and a display that displays notation data when notation data of the area is received from the messenger server. The method comprises the messenger server searching the area data set associated with received first identification data when position data of the first communication terminal and the first identification data are received from the first communication terminal, and transmitting notation data of the area in an area data set to the second communication terminal when an area data set, having definition data which includes the position to be represented by received position data, is detected.

In a further aspect, the present invention relates to a program for controlling a messenger server. The messenger server is provided in a messenger service system, in which multiple communication terminals exchange messages with each other, and transmits message data, input to one communication terminal, to another communication terminal. The messenger service system further comprises a first storage that stores an area data set, having definition data and notation data of a predetermined area, in association with identification data. Each communication terminal comprises a position acquirer that acquires its own position data and a display that displays notation data when notation data of the area is received from the messenger server. The program allows the messenger server to search the area data set associated with received first identification data when position data of the first communication terminal and the first identification data are received from the first communication terminal, and to transmit notation data of the area in the area data set to the second communication terminal when an area data set, having definition data which includes the position to be represented by position data, is detected.

In a still further aspect, the present invention relates to a system for providing a messenger service. The system comprises multiple communication terminals, a messenger server transmitting message data, input to one communication terminal, to another communication terminal, and first storage that stores an area data set, having definition data and notation data of a predetermined area, in association with identification data. Each communication terminal comprises a position acquirer that acquires its own position data, a display that displays notation data when notation data of the area is received from the messenger server, and a second storage. The first communication terminal acquires its own position data, reads the area data set associated with a first identification data from the first storage and stores that in the second storage, searches the second storage for the area data set having definition data which includes a position to be represented by its own position data, and, when the area data set is detected, transmits notation data of the area in the area data set to the messenger server, together with the first identification data. The messenger server receives notation data of the area and the first identification data from the first communication terminal and transmits them to the second communication terminal.

In the messenger service system, notation data of the area including the position of the first communication terminal is displayed on the second communication terminal. Thus, the user of the second communication terminal can grasp the position of the first communication terminal. In such a manner, since position information of a contact is automatically opened, a burden of care of a user is reduced. In addition, since the communication terminal acquires notation data of the area, the messenger server is needed to acquire notation data, and thus a load of the messenger server is reduced.

The first communication terminal may try to login to the messenger server using the first identification data, according to an instruction input to the first communication terminal, and, when the login is successful, acquire its own position data.

After detecting the area data set having definition data which includes the position to be represented by its own position data, the first communication terminal may repetitively acquire its own position data, and, if the position data represents a position outside the area to be defined by definition data in the detected area data set, search the second storage for the area data set having definition data which includes the position to be represented by acquired position data, and then, if the area data set is detected, transmit notation data of an area in the area data set to the messenger service system again, together with the first identification data. The messenger server may receive notation data of the area transmitted again and the first identification data from the first communication terminal and transmit them to the second communication terminal. According to the move of the first communication terminal outside the area, notation data of the area including the position of the first communication terminal is transmitted to the messenger server again. Thus, the move of the first communication terminal is reflected on notation data which is to be transmitted to the second communication terminal.

Each communication terminal may further comprise a third storage that stores notation data of a user who operates the communication terminal, in association with the identification data. If the area data set, having definition data which includes the position to be represented by its own position data, is detected, the first communication terminal may read user notation data associated with the first identification data from the third storage, create data in which user notation data is added to area notation data in the detected area data set, and transmit created data to the messenger server. The messenger server may transmit created data to the second communication terminal. The second communication terminal may receive and display created data. In this case, data, including notations of the user of the first communication terminal and the area in which the first communication terminal is positioned, is displayed on the second communication terminal. For this reason, the user of the second communication terminal can grasp the position of the first communication terminal and further specify easily who the user of the first communication terminal is.

The messenger service system may further comprise a management server for managing data input and output to the first storage. Each communication terminal may transmit the area data set and the identification data to the management server in response to an input of the area data set to the communication terminal. The management server may store the area data set received from the communication terminal in the first storage, in association with the identification data received from the same communication terminal. In this case, the user can register the area data set in the first storage using the communication terminal.

The messenger service system may further comprise a list storage that stores, in association with one identification data, at least one identification data list including at least one other identification data. Each communication terminal may try to login to the messenger server using the identification data in response to an input of an instruction to the communication terminal. The second communication terminal may be a communication terminal which logs in to the messenger server using identification data stored in the identification data list associated with the first identification data. If notation data of the area and the first identification data are received from the first communication terminal, the messenger server may refer to the identification data list associated with the first identification data, read at least one identification data stored in the identification data list, and transmit notation data of the area in the area data set to the second communication terminal which logs in to the messenger server using the read identification data.

After receiving notation data of the area and the first identification data from the first communication terminal, the messenger server may transmit notation data of the area received from the first communication terminal to the second communication terminal, in response to polling by the second communication terminal.

The messenger service system may further comprise a list storage that stores, in association with one identification data, at least one identification data list including at least one other identification data. The second communication terminal may transmit second identification data from the messenger server to perform the polling. The messenger server may search the identification data list associated with the second identification data for the first identification data, in response to the polling, and, when the first identification data is detected, transmit notation data of the area received from the first communication terminal to the second communication terminal.

In a still further aspect, the present invention relates to a method of controlling a messenger service system. The messenger service system comprises multiple communication terminals, a messenger server transmitting message data, input to one communication terminal, to another communication terminal, and a first storage that stores an area data set, having definition data and notation data of a predetermined area, in association with identification data. Each communication terminal comprises a position acquirer that acquires its own position data, a display that displays notation data when notation data of the area is received from the messenger server, and a second storage. The method includes a first communication terminal acquiring its own position data, and reading the area data set associated with a first identification data from the first storage and storing that in the second storage. The method also includes the first communication terminal searching the second storage for the area data set having definition data which includes a position to be represented by its own position data. If the area data set is detected, the first communication terminal transmits notation data of the area in the area data set to the messenger server, together with the first identification data. The messenger server receives notation data of the area and the first identification data from the first communication terminal and transmits them to a second communication terminal.

According to the present invention, a user who uses a messenger service with a communication terminal can grasp a position of another communication terminal which is used by another user, and thus convenience of the messenger service can be improved.

### BRIEF DESCRIPTION OF THE DRAWINGS

Fig. 1 is a schematic view showing a construction of a messenger service system;
Fig. 2 is a block diagram showing schematically a construction of a communication terminal;
Fig. 3 is a block diagram showing schematically a construction of a messenger server;
Fig. 4 is a schematic view showing a messenger screen;
Fig. 5 is a flowchart showing an area registration process;
Fig. 6 is a diagram showing a construction of an area table;
Fig. 7 is a flowchart showing various processes which are performed from login of a communication terminal up to logout;
Fig. 8 is a flowchart showing an area registration process;
Fig. 9 is a flowchart showing various processes which are performed from login of a communication terminal to logout;
Fig. 10 is a flowchart showing various processes which are performed from login of a communication terminal to logout;
Fig. 11 is a flowchart showing a process according to polling;
Fig. 12 is a schematic view showing a notation table; and
Fig. 13 is a schematic view showing a contact list.

### DESCRIPTION OF THE PREFERRED EMBODIMENTS

Hereinafter, embodiments of the present invention will be described in detail with reference to the attached drawings. Moreover, in the drawings, the same reference numerals represent the same elements, and thus the description of the same elements will be omitted.

### [FIRST EMBODIMENT]

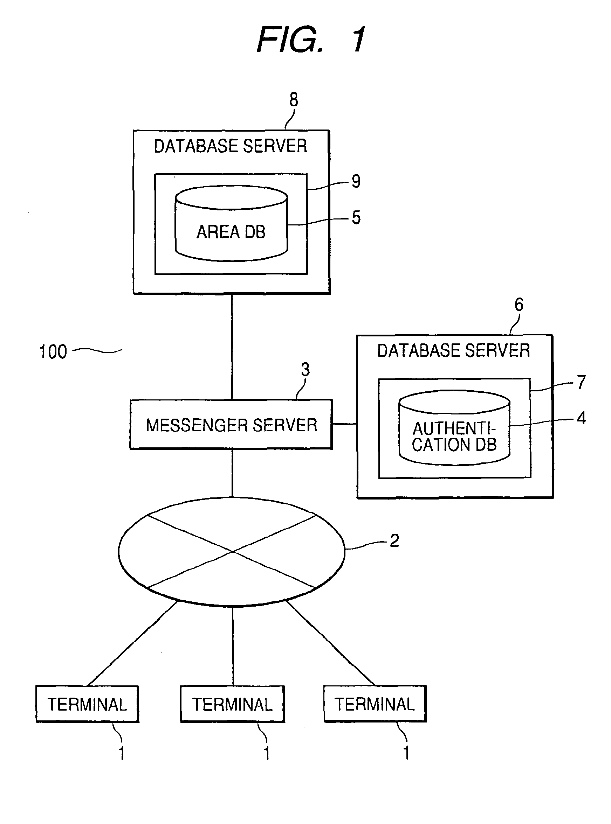

Fig. 1 is a schematic view showing a construction of a messenger service system 100. The messenger service system 100 includes communication terminals 1 which communicate with each other via a communication network 2 and a messenger server 3. A communication terminal 1 executes a messenger program to transmit and receive messages to and from another communication terminal 1. The communication terminal may be a mobile terminal such as a cellular phone or a fixed terminal such as a desktop computer. The messenger server 3 provides a messenger service with the communication terminal 1 as a client. The messenger server 3 forwards message data transmitted from a communication terminal 1 to another communication terminal 1. If necessary, the messenger server 3 may be made to access an authentication database 4 and an area database 5. The authentication database 4 stores data required for user authentication. The authentication database 4 is stored in a hard disk drive 7 of a database server 6. The area database 5 stores a set of area data which is registered by a user, as described below. The area database 5 is stored in a hard disk drive 9 of a database server 8. The database server 8 manages input and output of a set of area data to and from the area database 5.

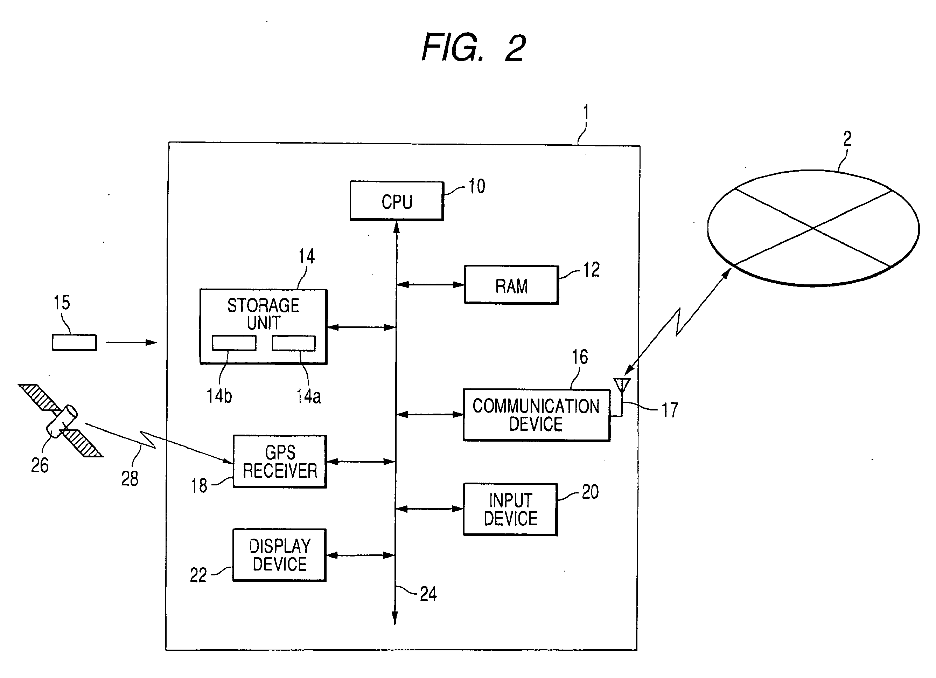

Fig. 2 is a block diagram showing schematically a construction of the communication terminal 1. The communication terminal 1 comprises a CPU (Central Process Unit) 10, a RAM (Random Access Memory) 12, a storage unit 14, a communication device 16, a GPS (Global Positioning System) receiver 18, an input device 20 and a display device 22. These elements are connected to each other by a bus 24. Data and control signals are transmitted between these elements via the bus 24.

The CPU 10 is a control arithmetic device which executes the messenger program and controls operations of the communication terminal 1. The RAM 12 is a main memory device which is used by the CPU 10 to execute the messenger program. The messenger program to be executed by the CPU 10 and data required for the execution are stored in the RAM 12.

The storage unit 14 is an auxiliary memory device of the communication terminal 1 and includes an internal memory 14a and a reader 14b for an external memory 15. The internal memory 14a is a memory device fixed inside the communication terminal 1. The internal memory 14a may be a non-volatile memory such as a flash memory or a hard disk drive. The reader 14b is a device for reading data from the external memory 15, which is removably mounted, and for storing data in the communication terminal 1. The external memory 15 may be a CD-ROM, a DVD-ROM or various card type memories. In the present embodiment, the messenger program is stored in the internal memory 14a. When the messenger program is executed, the messenger program is read from the internal memory 14a and is stored in the RAM 12.

The communication device 16 controls communication between the communication terminal 1 and messenger server 3 via the communication network 2. In the present embodiment, the communication device 16 performs wireless communication with the communication network 2. However, communication between the communication terminal 1 and the communication network 2 is not limited to the wireless system. Alternatively a wire system may be adopted. The communication device 16 transmits and receives electric waves via an antenna 17, based on the controls of the CPU 10, and it is wirelessly connected to the communication network 2. Thus, communication between the communication terminal 1 and the messenger server 3 is established.

The GPS receiver 18 receives a GPS signal 28 from a GPS satellite 26 and transmits positioning data according to the GPS signal 28 to the CPU 10. The positioning data includes a pair of latitude data and longitude data which represents a position of the communication terminal 1. Moreover, the GPS receiver 18 receives GPS signals from multiple GPS satellites, but, for simplicity, only one GPS satellite 26 is shown in Fig. 2.

The input device 20 is used to input instructions and data to the communication terminal 1. The input device 20 may be a device to be directly operated by the user, such as a button, a dial, a keyboard, a mouse, a stylus, or a voice recognition device which can recognize a voice of the user.

The display unit 22 displays various information based on the controls of the CPU 10. As described below, message data to be transmitted from another communication terminal 1 or notation data to be transmitted from the messenger server 3 is displayed on the display device 22.

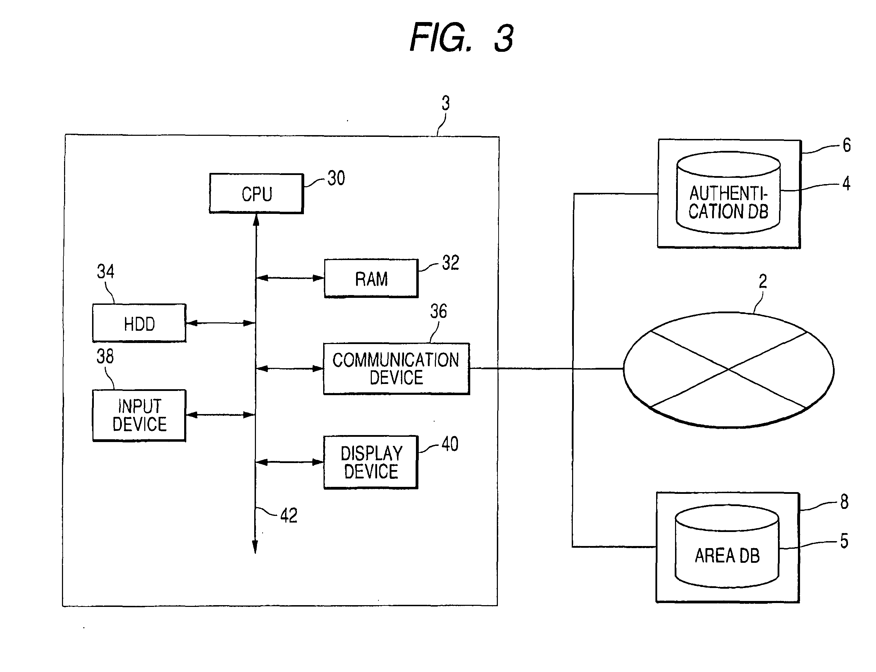

Fig. 3 is a block diagram showing schematically a construction of the messenger server 3. The messenger server 3 includes a CPU 30, a RAM 32, a hard disk drive 34, a communication device 36, an input device 38 and a display device 40. These elements are connected to each other by a bus 42. Data and control signals are transmitted between these elements via the bus 42.

The CPU 30 is a control arithmetic device which executes a server program and controls operations of the messenger server 3. The RAM 32 is a main memory device which is used by the CPU 30 to execute the server program. The server program to be executed by the CPU 30 and data required for the execution are stored in the RAM 32.

The hard disk drive 34 is an auxiliary memory device of the messenger server 3. In the hard disk drive 34, in addition to the server program, a contact list of each user is stored corresponding to identification data (ID) of each user. When the server is started, the server program is read from the hard disk drive 34 and is stored in the RAM 32, and then it is executed by the CPU 30.

The communication device 36 controls communication between the communication network 2 and the messenger server 3 and communication between the database servers 6 and 8 and the messenger server 3. The communication device 36 enables the messenger server 3 to access the authentication database 4 and the area database 5.

The input device 38 is used to input instructions and data to the messenger server 3. The display device 40 displays various information based on the controls of the CPU 30.

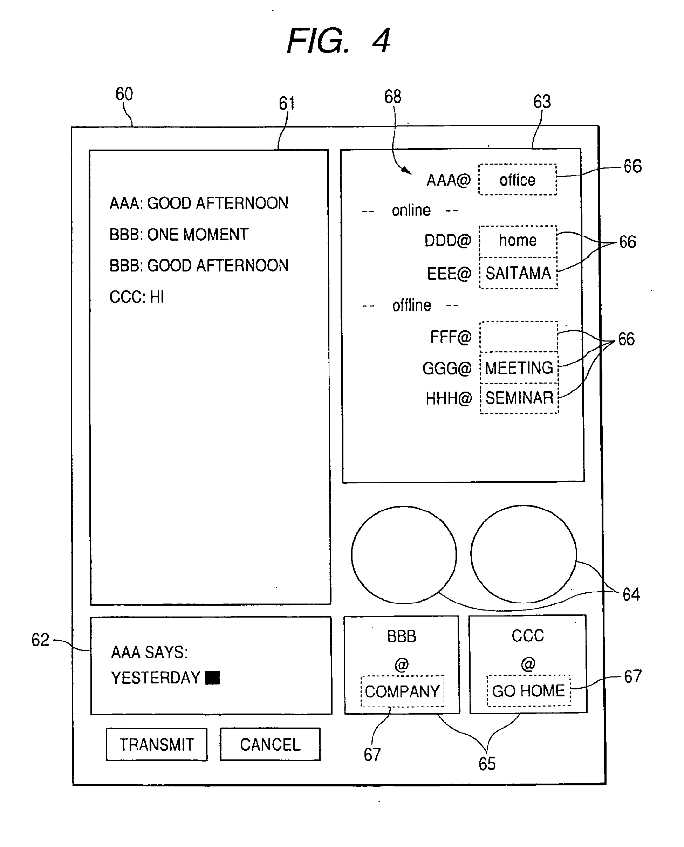

Hereinafter, a screen to be displayed on the display device 22 of the communication terminal 1 while the messenger service is used will be described with reference to Fig. 4. Fig. 4 shows an example of a messenger screen 60 to be displayed on the terminal 1 of a user 'A'. The messenger screen 60 includes a message display window 61, a message input window 62, a list member window 63, chat member pictures 64, and chat member information windows 65.

On the message display window 61, strings of characters of message data input by users (users A, B and C) who are attending in a chat are displayed, together with the registration names of the users. In Fig. 4, the registration names of users A, B, ··· H are represented as 'AAA', 'BBB', ··· 'HHH' respectively.

In the message input window 62, message data which is being input by the user A is displayed. The user A can input message data by operating the input device 20.

On the list member window 63, information regarding users who are not attending in the chat, among users registered in a contact list (described below) of the user A, is displayed. Users (in Fig. 4, users D and E) of the terminals 1 which log in to the messenger server 3 are displayed on a section 'online', and users (in Fig. 4, users F, G and H) of the terminals 1 which are not logged in to the messenger server 3 are displayed on a section 'offline'. In the respective sections, an '@ (at mark) ' is displayed respectively at right sides of the registration names of the users (' DDD' and so on). In addition, there are cases in which a string of characters 66 is displayed at a right side of '@'. The string of characters 66 is a notation of an area in which the terminal 1 of the user having the registration name, displayed at the left side of the string of characters 66, is positioned. Information defining the area and the area notation are previously registered by the user. The area registration process will be described later in detail. In the messenger screen 60 shown in Fig. 4, the area notation 66 of the user F is blank. In such a manner, the area notation 66 may be blank. The blank area notation 66 means that the terminal 1 of the user corresponding to the registration name is not within the registered areas. In an upper portion of the list member window 63, the registration name 'AAA' of the user A, '@' and the area notation 66 (in this example, 'office') of the user A are also displayed. Hereinafter, the string of characters 68, that is, 'AAA@office' is referred to as a personal notation.

The chat member pictures 64 are pictures showing users who are chat contacts. Data of the pictures 64 is stored in the storage unit 14 of the communication terminal 1. However, data of the pictures 64 may be stored in the hard disk drive 34 of the messenger server 3 or a memory device (for example, the authentication database 4) of another computer which the messenger server 3 can access. In this case, data of the pictures 64 is transmitted from the messenger server 3 to the communication terminal 1.

In each of the chat member information windows 65, information regarding the user who is a chat contact is displayed. More specifically, the registration name of the user, '@' and the area notation 67 are displayed. Similar to the above-mentioned area notation 66, the area notation 67 represents an area in which the terminal 1 of a user, having the registration name to be displayed in the same window 65 as the notation 67, is positioned. The area notation 67 may be blank, and then this means that the corresponding terminal 1 is not within the registered areas.

Hereinafter, in the system 100, various processes which are performed to provide the messenger service will be described. In these processes, the operation of the communication terminal 1 is controlled according to the messenger program, and the operation of the messenger server 3 is controlled according to the server program. The messenger program is read from the internal memory 14a and is stored in the RAM 12, and then it is executed by the CPU 10. The operation of the messenger server 3 is controlled according to the server program. The server program is read from the hard disk drive 34 and is stored the RAM 32, and then it is executed by the CPU 30.

In order to use the messenger service, the user needs to have previously operated the terminal 1 and performed user registration. The user transmits information required for registration from the terminal 1 via the communication network 2 to the messenger server 3. Information may include the registration name of the user and a password to be used for user authentication. The messenger server 3 determines registration using information to be transmitted from the terminal 1 and assigns native identification data, that is, user ID to the user whose registration is permitted. At the time of registration, the messenger server 3 stores information transmitted from the user in the authentication database 4, in association with the user ID. In the present embodiment, the registration name of the user and the password are also stored in the authentication database 4. In the terminal 1 of the user, a notice of registration is transmitted from the messenger server 3. In the notice of registration permission, the user ID assigned to the user is included.

The user ID and the password are required when the terminal 1 logs in to the messenger server 3. The user ID and the password may be input to the terminal 1 by the user or stored in the storage unit 14 of the terminal 1. In any case, after the terminal 1 logs in to the messenger server 3, the user ID is stored in the RAM 12.

In the system 100, similar to an existing messenger service, the registered users can exchange messages with each other, using the respective terminals 1. The user can create a contact list by operating the input device 20. In the contact list, the IDs of other users whom the user desires to notify of his own network status are listed. Hereinafter, a user having an ID listed in the contact list is referred to as 'a contact list member'. The contact list may be stored in the storage unit 14. The contact list is transmitted from the terminal 1 to the messenger server 3, together with the user ID used by the terminal 1 to log in to the messenger server 3. The messenger server 3 stores the received contact list and the user ID in the hard disk drive 34 such that they are associated with each other. Alternatively, the messenger server 3 may store the contact list and the user ID in an external memory device. For example, the contact list may be stored in the authentication database 4 in association with the user ID which is received together with the contact list.

In the system 100, the user can register an arbitrary two-dimensional area and a notation thereof. If the terminal 1 of the user is positioned within the registered area, the messenger server 3 multiaddresses notation data of the area to the terminals 1 of the contact list members of the user. The terminals 1 of the respective contact list members display area notation data received from the messenger server 3 as the area notations 66 and 67 (see Fig. 4) in the messenger screen 60.

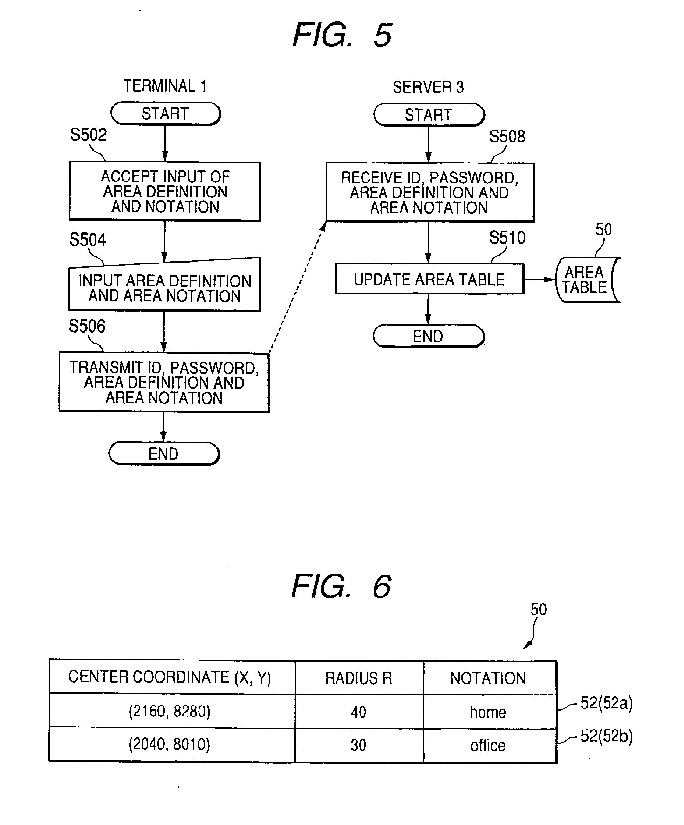

Hereinafter, an area registration process will be described with reference to Fig. 5. Fig. 5 is a flowchart of an area registration process. This process starts when the user operates the input device 20 of the terminal 1 to input an area registration start instruction.

First, the terminal 1 accepts an input of area definition and notation (step S502). The user operates the input device 20 of the terminal 1 to input definition data, of an area which the user desires to register, and notation data of the area (step S504) . The area is defined by a center coordinate (X, Y) and a radius R. That is, definition data of the area is a data set (X, Y, R) consisting of the center coordinate and the radius of the area. In the present embodiment, X and Y are data which represent latitude and longitude respectively. The center coordinate may be arbitrarily specified. For example, numeric values may be directly input or a desired position may be specified by a pointer moving on a map to be displayed on the display device 22. The area radius may also be arbitrarily specified. For example, a numeric value of the radius may be directly input or a circle representing an area on the map to be displayed on the display device 22 may be displayed in an expanded scale or in a reduced scale. Notation data of the area is intended to specify a display aspect of the area on the display device 22. The user operates the input device 20 of the terminal 1 to specify notation data. Notation data may be a string of characters consisting of a series of characters, numerals, symbols and so on, or images such as icons.

If definition data and notation data are input, the terminal 1 transmits definition data and notation data to the messenger server 3, together with the user ID and the password which are used to log in to the messenger server 3 (step S506) . The messenger server 3 receives the user ID, the password, definition data and notation data (step S508) and then updates an area table (step S510).

In the area table update process, the messenger server 3 accesses the area database 5, and reads the area table 50 associated with the received user ID and stores the area table 50 in the RAM 32. Fig. 6 shows a construction of the area table 50. The area table 50 has three categories of coordinate, radius and notation. Each row consisting of three categories is an area data set 52. In Fig. 6, the center coordinates X and Y have values corresponding to a pair of latitude and longitude respectively, similar to GPS positioning data. Alternatively, X and Y may have relative values of latitude and longitude respectively. The messenger server 3 determines whether or not registration of received definition data and notation data are permitted to be registered in the area table 50, based on received definition data.

More specifically, the messenger server 3 searches the area table 50 stored in the RAM 32 with respect to definition data. If an area data set 52 including the same definition data (X, Y, R) is detected, the messenger server 3 compares received notation data with notation data in the area data set 52. If both of them accord with each other, the messenger server 3 does not register received definition data and notation data to the area table 50 and transmits a notice of registration refusal to the terminal 1 which is a transmission source. In such a manner, repetitive registration of the area data set is avoided. If received notation data is different from notation data in the area data set 52, the messenger server 3 ask the terminal 1 about an overwriting of notation data. If an overwriting request is received from the terminal 1, the messenger server 3 updates notation data in the area data set 52, to the received notation data. In this situation, the messenger server 3 checks whether or not multiple area data sets 52 include the same definition data as definition data received from the terminal 1. If multiple area data sets 52 exist, the messenger server 3 updates notation data in the old area data set 52 or deletes the old area data set 52, to newly register an area data set 52 including definition data and notation data received from the terminal 1.

Meanwhile, if received definition data is not detected in any one of the area data sets 52 of the area table 50, the messenger server 3 adds received definition data and notation data to the area table 50 as a new area data set 52. Moreover, the maximum registerable number of the area data sets 52 in the area table 50 which is associated with one user ID may be predetermined. In this case, if the maximum registerable number of area data sets 52 are stored in the area table 50, the messenger server 3 does not register received definition data and notation data to the area table 50 and transmits a notice of registration refusal to the terminal 1 of the transmission source.

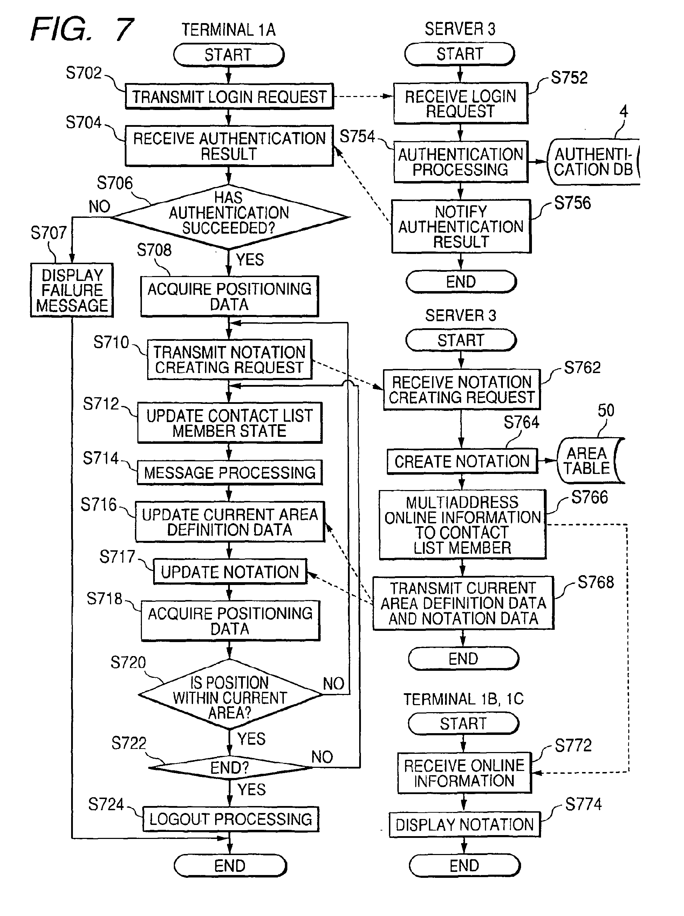

Hereinafter, examples of various processes which are performed in the system 100 from login of the communication terminal 1 to the messenger server 3 to logout will be described with reference to Fig. 7. Fig. 7 is a flowchart showing the processes. Hereinafter, the user who operates the communication terminal 1 logged in to the messenger server 3 is denoted as 'user A'. It is supposed that in the contact list of the user A, the user B and user C are included. The communication terminals 1 to be operated by the users A, B and C are denoted as 'terminal 1A', 'terminal 1B' and 'terminal 1C', respectively.

If the user A starts the messenger program on the terminal 1A, the terminal 1A transmits a login request to the messenger server 3 automatically or in response to an input of an instruction to the terminal 1A with the input device 20 (step S702). In the login request, an ID and an authentication code (for example, password) of the user A are included. The ID may be input by the user A or it may be previously stored in the storage unit 14 of the terminal 1A and be read therefrom. If the login request is received (step S752), the messenger server 3 accesses the authentication database 4, executes an authentication process (step S754), and transmits an authentication result to the terminal 1A (step S756). In the step S754, the messenger server 3 searches the authentication database 4 for a pair of the user ID and the authentication code which is included in the login request. If the pair of data is detected within the authentication database 4, the messenger server 3 transmits a notice of authentication success to the terminal 1A in step S756. Further, the messenger server 3 stores in the RAM 32 registration name data, associated with the ID of the user A, and obtained from the authentication database 4. In addition, the messenger server 3 stores the area table 50 and the contact list associated with the ID of the user A in the RAM 32. In such a manner, the messenger server 3 stores the registration name, the area table and the contact list of an online user, who succeeds in login authentication, in the RAM 32 such that they are associated with the ID of the user. Thus, the messenger server 3 can specify an ID used for login of the terminal 1 which is logged in to the messenger server 3, that is, in an online status. Meanwhile, if the pair of data of the user ID and the authentication code is not detected in the authentication database 4, at step S756, the messenger server 3 transmits a notice of authentication failure to the terminal 1A.

The terminal 1A receives a notice of authentication result from the messenger server 3 (step S704), and determines whether authentication has succeeded or failed (step S706). In the case in which the notice of authentication failure is received from the messenger server 3 (No at the step S706), the terminal 1A displays a message indicating that the authentication has failed on the display device 22 (step S707). Meanwhile, in the case in which the notice of authentication success is received from the messenger server 3 (Yes at the step S706), the terminal 1A acquires positioning data of the terminal 1A using the GPS receiver 18 (step S708). Positioning data includes a pair of latitude data and longitude data which represent a position of the terminal 1A and is stored in the RAM 12.

Next, the terminal 1A transmits to the messenger server 3 a request for notation data creation which is multiaddressed to the terminals 1 of the contact list members of the user A (step S710). The request for notation creation requests the messenger server 3 to create notation data including a notation of an area in which the terminal 1A is positioned. In the request for notation creation, the ID of the user A and positioning data are included. If the request for notation creation is received (step S762), the messenger server 3 refers the area table 50 associated with the ID of the user A and creates notation data (step S764). The messenger server 3 determines whether or not a position to be represented by positioning data, included in the request for notation creation, is included in an area defined by any of the area data sets 52 of the referred area table 50. If the area data set 52 having definition data which includes the position to be represented by positioning data is detected within the area table 50, the messenger server 3 creates a string of characters of '(user registration name)@(area notation)' using notation data of the area included in the area data set 52. User registration name data is searched from the authentication database 4 using the ID of the user A. The messenger server 3 adds area notation data to registration name data and the character code of '@' to create the string of characters. The string of characters is notation data which is multiaddressed to the terminals 1 of the contact list members. Meanwhile, if the area data set 52 having definition data which includes the position to be represented by positioning data is not detected within the area table 50, the area notation data is blank. That is, the messenger server 3 creates the string of characters of ' (user registration name) @' as notation data for multiaddressing.

Hereinafter, a notation data creation process is exemplified. It is supposed that the area table 50 shown in Fig. 6 is associated with the ID of the user A and the registration name 'AAA' of the user A is associated with the ID of the user A in the authentication database 4. If positioning data included in the request for notation creation is a coordinate (2042, 8020), the coordinate is included within the area which is defined by the area data set 52b. Therefore, the messenger server 3 creates a string of characters of 'AAA@office' as notation data for multiaddressing, using area notation data in the area data set 52b. However, if positioning data of the terminal 1A is a coordinate (2300, 8400), the coordinate is not included in any one of areas which are defined by the area data sets 52a and 52b. In this case, the messenger server 3 set area notation data as blank and creates a string of characters 'AAA@' as notation data for multiaddressing.

After creating notation data for multiaddressing, the messenger server 3 multiaddresses online information of the user A to the terminals 1 (in this example, the terminals 1B and 1C) of the contact list members (in this example, the users B and C) (step S766). The messenger server 3 searches the RAM 32 for the contact list associated with the ID of the user A which is included in the request for notation creation and acquires the IDs of the contact list members for the user A which are registered in the contact list. The messenger server 3 specifies the terminals 1B and 1C which are logged in to the messenger server 3, using the acquired IDs, and multiaddresses online information of the user A to the terminals 1B and 1C. In online information, notation data created at the step 764 is included, as well as the ID and an online notice of the user A. Moreover, the online notice is data indicating that the terminal 1A is logged in to the messenger server 3.

If the terminals 1B and 1C receive the online information (step S772), they display notation data included in the online information on an 'online' region in the list member window 63 of the messenger 60 (step S774). In such a manner, the area notation 66, indicating a position of a terminal of a user, is displayed on the terminals of the contact list members of the user. Moreover, the terminals 1B and 1C execute the same messenger program as that of the terminal 1A, and thus the terminals 1B and 1C perform the same process flow as that of the terminal 1A. However, in Fig. 7, for the purpose of simplicity, only a process corresponding to a receipt of online information from the messenger server 3 is shown.

The messenger server 3 transmits definition data (X, Y, R) of an area in which the terminal 1A is currently positioned and notation data created at the step S764 to the terminal 1A (step S768). When the area data set 52 having definition data which includes the position to be represented by positioning data transmitted from the terminal 1A is detected within the area table 50, the messenger server 3 returns definition data (X, Y, R) in the area data set 52 to the terminal 1A. Meanwhile, in the case in which the area data set 52 having definition data which includes the position to be represented by positioning data is not detected, the messenger server 3 returns (0, 0, 0) to the terminal 1A as current area definition data. In addition, the messenger server 3 transmits notation data created at the step S764 to the terminal 1A, as well as current area definition data. The terminal 1A displays received notation data on the display device 22. Actually, on the list member window 63 of Fig. 4, notation data of 'AAA@office' created at the step S764 is displayed as a self notation 68. Thus, it is possible for the user A to check notation data which is multiaddressed to other users.

Moreover, the messenger server 3 may execute the multiaddressing of online information (step S766) and the transmission of current area definition data (step S768) in an opposite order to that in Fig. 7. Further, these processes may be simultaneously performed.

After transmitting the request for notation creation (step S710), the terminal 1A performs a contact list member status update process (step S712). In this process, the terminal 1A updates data indicating a status of the contact list member in response to a receipt of predetermined information from the messenger server 3. If a terminal 1 logs in to or logs out of the messenger server 3, the messenger server 3 transmits online information or offline information to all the terminals 1 of online users who have a contact list that includes the ID of the user. The transmitting of online information is performed at the step S766. The transmitting of online information is performed in cooperation with a logout process (step S724) in the terminal 1 described below. In online information, the ID of the user who logged out is included.

If the receipt of online information or offline information is confirmed at the step S712, the terminal 1A updates status data associated with the user ID which is included in online information or offline information. Status data is provided in the RAM 12 to each of the contact list members. Status data is rewritten to data indicating login in response to the receipt of online information and is rewritten to data indicating logout in response to the receipt of offline information. Further, when the receipt of online information or offline information is not confirmed, status data is not updated. In addition, the terminal 1A displays notation data ('DDD@home' and so on) on an online region or an offline region in the list member window 63 (see Fig. 4) according to status data of the contact list members. This corresponds to the step S774 described above with respect to the terminals 1B and 1C.

The terminal 1A also performs a message process (step S714). In this process, the terminal 1A checks whether or not an input of message data using the input device 20 is present. If input message data is confirmed, the terminal 1A transmits message data to the messenger server 3, together with the ID of the user who is a transmission destination. If a message is received from the terminal 1A, the messenger server 3 transfers message data to the terminal 1 of the user who is a transmission destination. Further, at the step S714, the terminal 1A checks whether or not message data transmitted from other terminals 1 was transferred from the messenger server 3. When the receipt of the message is confirmed, the terminal 1A displays message data in the messenger screen 60.

In addition, the terminal 1A performs current area definition data update process (step S716). In this process, the terminal 1A checks whether current area definition data (X, Y, R) described above is transmitted from the messenger server 3. Current area definition data is transmitted at the above-mentioned step S768. If the receipt of current area definition data is confirmed, the terminal 1A stores it in predetermined regions of the RAM 12 respectively. In the case in which all current area definition data is stored, current area definition data is overwritten with current area definition data that is received.

Subsequently, the terminal 1A performs a notation update process (step S717). In this process, the terminal 1A updates the self notation 68 in the list member window 63 using notation data received from the messenger server 3. Thus, the latest notation data is displayed in the list member window 63 as the self notation 68.

Next, the terminal 1A acquires positioning data of the terminal 1A from the GPS satellite (step S718), and determines whether or not a position to be represented by positioning data is within a current area which is determined by current area definition data stored in the RAM 12 (step S720).

If it is determined that the position to be represented by positioning data is within the current area (Yes at the step S720) , the terminal 1A checks whether or not an end instruction is input (step S722). In the case in which the input of the end instruction is not confirmed (No at the step S722), the terminal 1A repeats the processes from the step S712 to the step S720.

When the terminal 1A moves outside the current area, it is determined that the position to be represented by positioning data is not within the current area (No at the step S720). In this case, the process returns to the step S710, and then the request for notation creation is transmitted to the messenger server 3 again. Accordingly, the messenger server 3 performs the steps S762 to S768 again. In the step S764, the move of the terminal 1A outside the area is reflected on area notation data which is multiaddressed to the terminals 1B and 1C. In the step S766, notation data including a new area notation is multiaddressed to the terminals 1B and 1C. In such a manner, the move of the terminal 1A outside the area is detected, and thus area notation data for multiaddressing is changed. In the case in which the position to be represented by positioning data is included in another registered area different from the previous area, at the step 5768, definition data of that area is transmitted to the terminal 1A, and then current area definition data in the RAM 12 is updated (step S716).

When current area definition data is (0, 0, 0), it is determined that the position to be represented by positioning data is not within the current area (No at the step S720). In this case, after a delay for a predetermined time is provided, the process returns to the step S710. By providing a delay, it is possible to minimize a frequency of transmitting the request for notation creation to the messenger server 3, and thus it is possible to reduce quantity of communication. According to the request for notation creation, the messenger server 3 performs the steps S762 to S768 again. As described above, current area definition data of (0, 0, 0) is generated when the area data set 52, including the position to be represented by positioning data, is not detected. In this case, the terminal 1 repetitively transmits positioning data to the messenger server 3, and then the messenger server 3 repeats a search for the area data set 52 including the position to be represented by positioning data. Thus, when the terminal 1A moves from an outside of the registered area to an inside thereof, the messenger server 3 can acquire notation data corresponding to that area and multiaddresses notation data to the terminals 1B and 1C. As a result, the move of the terminal 1A inside the area is reflected on the area notation which is displayed in the terminals 1B and 1C.

Meanwhile, if the input of the end instruction is confirmed (Yes at the step S722), the terminal 1A performs a logout process (step S724). In this process, the terminal 1A transmits a request for logout to the messenger server 3. In the request for logout, the ID of the user A is included. If the request for logout is received, the messenger server 3 disconnects the terminal 1A from the server 3 and multiaddresses offline information to the terminals 1 of the online users which have a contact list that includes the ID of the user A. The terminals 1 that receive offline information update the list member window 63 (see Fig. 4) and moves a display position of notation data for multiaddressing to the user A from the online region to the offline region.

Hereinafter, advantages of the present embodiment will be described. In the messenger service system 100, the notation of the area in which the communication terminal 1 is positioned is displayed on other communication terminals 1. Therefore, the user can grasp other user's residence from the area notation. Thus, convenience of the messenger service is improved. For example, it is possible to determine according to the residence whether the message transmission is right or wrong, and thus it is possible to avoid putting a contact to trouble. In such a manner, since position information of the contact is automatically opened, a burden of care of the user is alleviated.

Further, in the system 100, the messenger server 3, not the communication terminal 1 of the user, determines area notation data according to the position of the terminal 1 and creates notation data for multiaddressing. The area table 50 including area notation data is stored in a memory device provided outside the communication terminal 1, that is, the hard disk drive 9 of the area database 5, and is managed by the messenger server 3. Therefore, even in the case in which one user uses multiple communication terminals 1 properly, area notation data is determined based on a common area table. The user does not need to create and update the area table for every terminal, and further the user does not need to consider a difference of terminals to be used. This point is convenient for the user.

### [SECOND EMBODIMENT]

Hereinafter, a second embodiment of the present invention will be described. The present embodiment is different from the first embodiment in that the communication terminal 1, not the messenger server 3, creates notation data for multiaddressing. The construction of the messenger service system 100 is the same as that described above with reference to Figs. 1 to 3. Further, a screen to be displayed on the display device 22 of the communication terminal 1 while the messenger service is used is the same as that of Fig. 4.

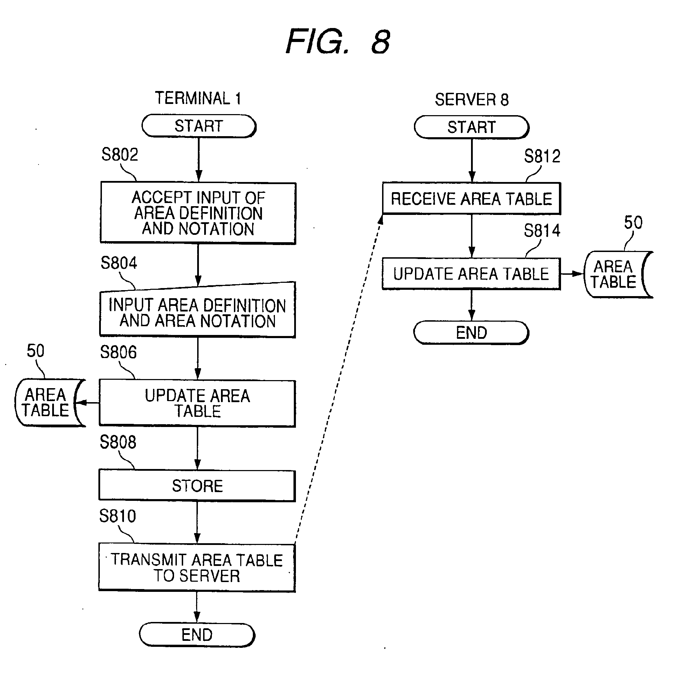

Fig. 8 is a flowchart showing an area registration process of the present embodiment. Similar to the first embodiment, this process is started when the user operates the input device 20 of the communication terminal 1 to input the area registration start instruction. First, the terminal 1 accepts an input of area definition and notation (step S802). The user operates the input device 20 of the terminal 1 to input definition data of an area which the user desires to register and notation data of that area (step S804). As regards definition data and notation data, the same description as that of the first embodiment is applied.

If definition data and notation data are input, the terminal 1 performs an area table update process (step S806). In this process, the terminal 1 accesses the area database 5 and allows the database server 8 to search for the area table 50 associated with the ID of the user who operates the terminal 1. In the case in which the area table 50 is not detected, the terminal 1 newly creates the area table 50 using input definition data and notation data. In the case in which the area table 50 is detected, the terminal 1 receives the area table 50 from the database server 8 and stores that in the RAM 12. Subsequently, the terminal 1 determines, based on input definition data, whether or not registration of input definition data and notation data to the area table 50 is permissible.

More specifically, the terminal 1 searches the area table 50 stored in the RAM 12 for input definition data. If the area data set 52 including the same definition data (X, Y, R) is detected, the terminal 1 compares input notation data with notation data in the area data set 52. If both of them accord with each other, the terminal 1 does not register input definition data and notation to the area table 50, and displays a string of characters indicating that all data are already registered. In such a manner, repetitive registration of the area data set is avoided. In the case in which input notation data is different from notation data in the area data set 52, the terminal 1 displays a string of characters to ask for an overwriting of notation data. If an overwriting instruction is input to the terminal 1, the terminal 1 updates notation data in the area data set 52 to input notation data. In this situation, the terminal 1 checks whether or not multiple area data sets 52 include the same (or overlapping) definition data as the input definition data. If multiple area data sets 52 exist, the terminal 1 updates notation data in the old area data set 52 or deletes the old area data set 52, to newly register an area data set 52 including definition data and notation data received from the terminal 1.

Meanwhile, if input definition data is not detected in any one of the area data sets 52 of the area table 50, the terminal 1 adds input definition data and notation data to the area table 50 as a new area data set 52. Similar to the first embodiment, the maximum registerable number of the area data sets 52 in the area table 50 which is associated with one user ID may be predetermined. In this case, if the maximum number of area data sets 52 are stored in the area table 50, the terminal 1 does not register input definition data and notation data to the area table 50, and the terminal displays a string of characters indicating registration failure.

The terminal 1 stores the area table 50 updated in such a manner (at step 806) in the storage unit 14, that is, the internal memory 14a or the external memory 15 (step S808). Further, the terminal 1 transmits the area table 50 to the database server 8, together with the user ID (step S810). The database server 8 receives the area table 50 and the user ID (step S812) and executes an area table update process (step S814). More specifically, in the area database 5, the area table 50 in the area database 5 associated with the received user ID is overwritten with the received area table 50. In such a manner, a change of the area table 50 by the terminal 1 is reflected on the area database 5.

Moreover, the terminal 1 may perform the storing of the area table 50 (step S808) and the transmission of the area table 50 (step S810) in an opposite order to that in Fig. 8. Further, these processes may be simultaneously performed.

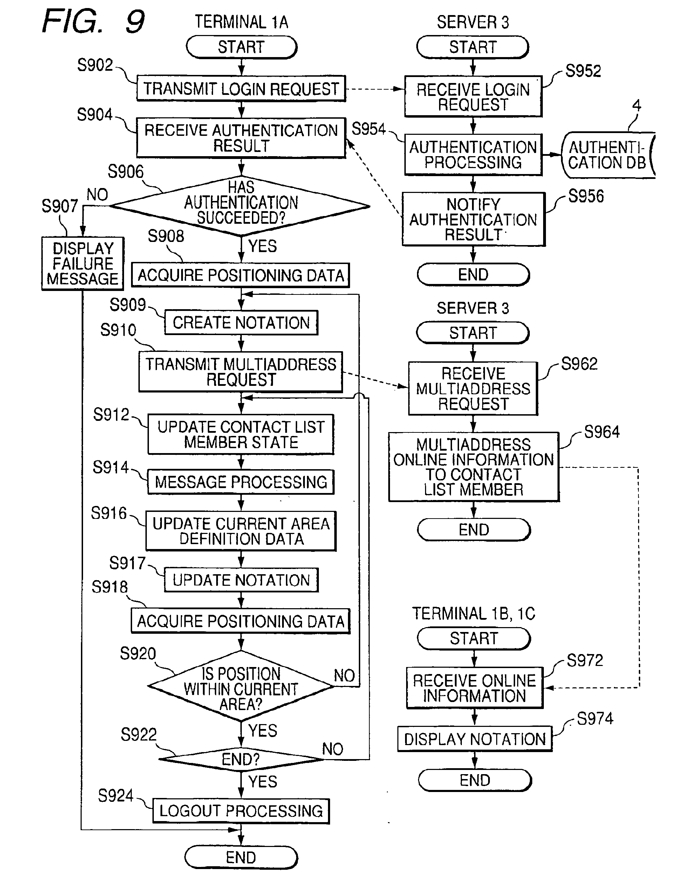

Hereinafter, various processes which are performed in the system 100, from login of the communication terminal 1 to the messenger server 3 to logout, will be described with reference to Fig. 9, with emphasis on a difference from the first embodiment. Fig. 9 is a flowchart showing these processes. Similar to the first embodiment, hereinafter, a user who operates the communication terminal 1 logged in to the messenger server 3 is denoted as 'user A'. It is supposed that in the contact list of the user A, the users B and C are included. The communication terminals 1 to be operated by the users A, B and C are denoted as 'terminal 1A', 'terminal 1B' and 'terminal 1C', respectively.

If the user A starts the messenger program on the terminal 1A, the terminal 1A transmits a login request to the messenger server 3 automatically or in response to an input of an instruction to the terminal 1A with the input device 20 (step S902). Subsequently, the same processes as those of the first embodiment are performed (steps S952 to S956 and S904 to S908). If the notice of authentication success is received from the messenger server 3 (Yes at the step S906), the terminal 1A acquires positioning data of the terminal 1A using the GPS receiver 18 (step S908). Positioning data includes a pair of latitude data and longitude data which represent a position of the terminal 1A, and is stored in the RAM 12.

Next, the terminal 1A creates notation data using positioning data (step S909). The terminal 1A accesses the database server 8 and acquires the area table 50 associated with the ID of the user A from the area database 5 to store that in the RAM 12. The terminal 1A determines whether the position to be represented by positioning data is included in an area which is defined by any one of the area data sets 52 of the area table 50. If the area data set 52 having definition data which includes the position to be represented by positioning data is detected in the area table 50, the terminal 1A creates a string of characters of '(user registration name)@(area notation)' using notation data of the area included in the area data set 52. User registration name data is stored in the storage unit 14 at the time of the user registration process, and further it is read from the storage unit 14 and stored in the RAM 12 at the time of starting of the messenger program. The terminal 1A adds notation data to registration name data and the character code of '@' to create the above-mentioned string of characters. The string of characters is notation data which is multiaddressed to the terminals 1 of the contact list members of the user A. Meanwhile, in the case in which the area data set 52 having definition data which includes the position to be represented by positioning data is not detected in the area table 50, notation data of the area is blank. That is, the terminal 1A creates a string of characters of ' (user registration name) @' as notation data for multiaddressing.

After creating notation data for multiaddressing, the terminal 1A transmits a request for multiaddressing to the messenger server 3 and requests the messenger server 3 to multiaddress notation data (step S910). In the request for multiaddressing, notation data created by the terminal 1A and the ID of the user A are included. If the request for multiaddressing is received (step S962), the messenger server 3 multiaddresses online information of the user A to the contact list members of the user A (step S964). The messenger server 3 searches the RAM 32 for the contact list associated with the ID of the user A which is included in the request for multiaddressing and acquires the IDs of the contact list members (in this example, the users B and C) for the user A which are registered in the contact list. The messenger server 3 specifies the terminals 1B and 1C which are logged in to the messenger server 3, using the IDs acquired in such a manner, and multiaddresses online information of the user A to the terminal 1B and 1C. In online information, notation data transmitted from the terminal 1A is included, as well as the ID of the user A and a login notice. Moreover, as described above, the login notice is data indicating that the terminal 1A is logged in to the messenger server 3.

If the terminals 1B and 1C receive online information (step S972), they display notation data included in online information on an 'online' region in the list member window 63 of the messenger screen 60 (step S974). In such a manner, the area notation 66 indicating the position of the terminal of a user is displayed on the terminals of the contact list members of that user. Moreover, the terminals 1B and 1C execute the same messenger program as that of the terminal 1A, and thus the terminals 1B and 1C perform the same process flow as that of the terminal 1A. However, in Fig. 9, for the purpose of simplicity, only a process corresponding to a receipt of online information from the messenger server 3 is shown.

After transmitting the request for multiaddressing (step S910), similar to the first embodiment, the terminal 1A performs a contact list member status update process (step S912) and a message process (step S914). In addition, the terminal 1A performs a current area definition data update process (step S916). The terminal 1A refers to the latest positioning data and the area table 50, specifies definition data (X, Y, R) of an area in which the terminal 1A is currently positioned, and stores that in a predetermined region of the RAM 12. In the case in which the current area definition data (X, Y, R) are stored, current area definition data is overwritten with new current area definition data.

Subsequently, the terminal 1A performs a notation update process (step S917). In this process, the terminal 1A updates the self notation 68 in the list member window 63 using notation data created at the step S909. Thus, the latest notation data is displayed in the list member window 63 as the self notation 68.

Next, the terminal 1A acquires positioning data of the terminal 1A from the GPS satellite (step S918) and determines whether or not a position to be represented by positioning data is within a current area which is determined by current area definition data stored in the RAM 12 (step S920).

If it is determined that the position to be represented by positioning data is within the current data (Yes at the step S920), the terminal 1A checks whether an end instruction is input (step S922). If the input of the end instruction is not confirmed (No at the step S922), the terminal 1A repeats the processes from the step S912 to the step S920.

When the terminal 1A moves outside the current area, it is determined that the position to be represented by positioning data is within the current area (No at the step S920). In this case, the process returns to the step S909 and then notation data for multiaddressing is created again. The move of the terminal 1A outside the area is reflected on the area notation of notation data to be created at the step S909. Next, the request for multiaddressing is transmitted to the messenger server 3 (step S910), and notation data including a new area notation is multiaddressed to the terminals 1B and 1C (step S964).

When current area definition data is (0, 0, 0), it is also determined that the position to be represented by positioning data is not within the current area (No at the step S920), the process returns to the step S909, and notation data is created. As described above, current area definition data of (0, 0, 0) is generate when the area data set 52, including the position to be represented by positioning data, is not detected. In this case, the terminal 1A creates a string of characters of ' (user registration name) @' as notation data for multiaddressing.

Meanwhile, if the input of the end instruction is confirmed (Yes at the step S922), the terminal 1A performs a logout process (step S924). The details of the logout process are the same as those of the first embodiment.

In the present embodiment, similar to the first embodiment, since a user can grasp another user's residence from the area notation, convenience of the messenger service is improved. Further, the area table 50 is stored in a memory device provided outside the communication terminal 1, that is, the hard disk drive 9 of the area database 5, and the terminal 1 creates notation data for multiaddressing with the area table 50. For this reason, even in the case in which one user uses multiple communication terminals 1 properly, area notation data is determined based on a common area table. The user does not need to create and update the area table for every terminal, and further the user does not need to consider a difference of terminals to be used. This point is also convenient for the user. Further, in the present embodiment, since the terminal 1 creates notation data for multiaddressing, it is possible to reduce a load of the messenger server 3.

### [THIRD EMBODIMENT]

Hereinafter, a third embodiment of the present invention will be described. The present embodiment is different from the first embodiment in that the messenger server 3 transmits notation data to the communication terminals 1 in response to polling by each of the communication terminals 1, and does not multiaddress notation data to the communication terminals 1. Further, in the present embodiment, in the contact list of each user, other users whom a user desires to notice his status are included as the contact list members. The construction of the messenger service system 100 is the same as that described above with reference to Figs. 1 to 3. Further, a screen to be displayed on the display device 22 of the communication terminal 1 while the messenger service is used is the same as that of Fig. 4. The area registration process is the same as that shown in Fig. 5.

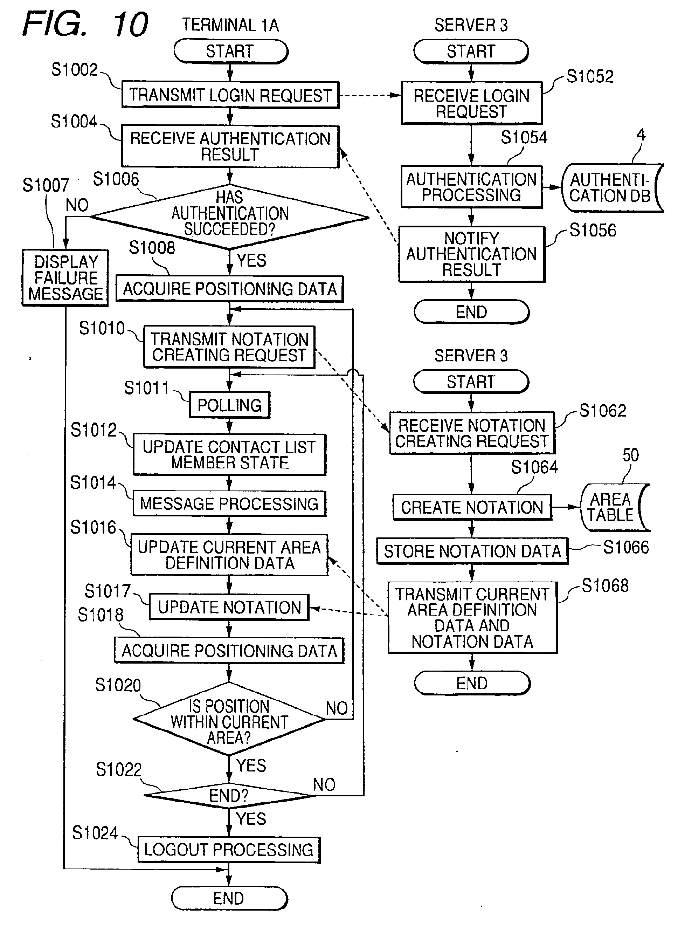

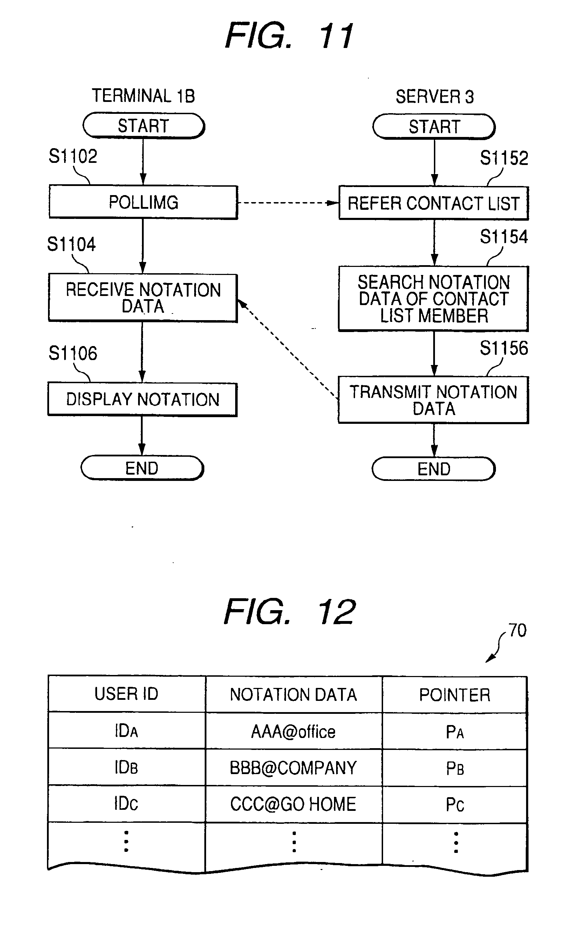

Hereinafter, various processes which are performed in the system 100, from login of the communication terminal 1 to the messenger server 3 to logout, will be described with reference to Figs. 10 and 11, with emphasis on a difference from the first embodiment. Figs. 10 and 11 are flowcharts showing these processes. Hereinafter, similar to the first embodiment, the user who operates the communication terminal 1 logged in to the messenger server 3 is denoted as 'user A'. It is supposed that in the contact list of the user A, the user B and user C are included. The communication terminals 1 to be operated by the users A, B and C are denoted as 'terminal 1A', 'terminal 1B' and 'terminal 1C', respectively.

If the user A starts the messenger program on the terminal 1A, the terminal 1A transmits a login request to the messenger server 3 automatically or in response to an input of an instruction to the terminal 1A with the input device 20 (step S1002). Subsequently, the same processes as those of the first embodiment are performed (steps S1052 to S1056 and S1004 to S1008). If the notice of authentication success is received from the messenger server 3 (Yes at the step S1006), the terminal 1A acquires positioning data of the terminal 1A using the GPS receiver 18 (step S1008). Positioning data includes a pair of latitude data and longitude data which represent a position of the terminal 1A, and is stored in the RAM 12.

Next, the terminal 1A transmits to the messenger server 3 a request for notation data creation, in which notation data is transmitted to the terminals 1 of the users who have the user A as the contact list member (step s1010). Accordingly, the messenger server 3 creates notation data in the same manner as that of the first embodiment (steps S1062 and S1064).

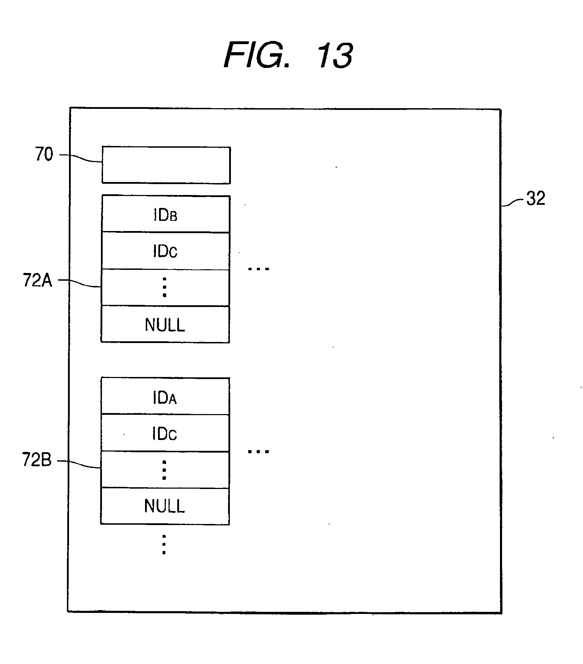

The messenger server 3 stores created notation data in a notation table 70 shown in Fig. 12 (step S1066). The notation table 70 is created in the RAM 32 of the messenger server 3 and stores notation data and a pointer to the contact list for every user ID. In Fig. 12, the IDs of the users A, B and C are denoted as 'ID_{A}', 'ID_{B}' and 'ID_{C}', respectively, and the pointers to the contact lists of the users A, B and C are denoted as 'P_{A}', 'P_{B}' and 'P_{C}', respectively. In a 'notation data' field of the user in an offline status, NULL data may be stored. As shown in Fig. 13, the contact list 72 of each user is stored in a predetermined position in the RAM 32. The pointer in the notation table 70 represents a storing position (location) of the contact list in the RAM 32. In Fig. 13, the contact lists 72 of the users A and B are denoted as 'contact list 72A' and 'contact list 72B' , respectively. In the contact list 72 of each user, the IDs of the contact list members of the user are stored. An upper limit to the number of registerable members in the contact list 72 may be provided. In the contact list 72, in a region in which the ID of the member is not registered, NULL data is stored.

As shown in Fig. 12, created notation data of the user A is stored in a 'notation data' field associated with ID_{A} in the notation table 70. If notation data is stored in all the fields, notation data is overwritten with newly created notation data.

Next, the messenger server 3 transmits definition data (X, Y, R) of an area in which the terminal 1A is currently positioned and notation data created at the step S1064 to the terminal 1A (step S1068). Moreover, the messenger server 3 may perform the storing of notation data (step S1066) and the transmission of current area definition data and notation data (step S1068) in an opposite order to that shown in Fig. 10. Further, these processes may be simultaneously performed.

Hereinafter, a process of transmitting notation data of the user A stored in the notation table 70 to the terminal 1 of another user will be described with reference to Fig. 11. The messenger server 3 transmits notation data of the user A to the terminal 1 in response to polling by the terminals 1 of the users who have registered the user A in their contact lists. For example, the user B has registered the user A in its own contact list 72B. Therefore, the messenger server 3 transmits notation data of the user A to the terminal 1B in response to polling by the terminal 1B.

More specifically, as shown in Fig. 11, the terminal 1B performs polling to the messenger server 3 (step S1102). The polling is a process of asking the messenger server 3 whether or not transmission data to the terminal 1B exists. As transmission data, notation data of the contact list member (for example, the user A) for the user B or message data addressed to the user B from other users may be included. At the time of the polling, the terminal 1B transmits the ID of the user B to the messenger server 3. As described below with reference to Fig. 10, the polling is repetitively performed at a proper time interval. Moreover, the terminal 1B executes the same messenger program as that of the terminal 1A, and thus the terminal 1B performs the same process flow as that of the terminal 1A. However, in Fig. 11, for the purpose of simplicity, only a process of transmitting and receiving notation data corresponding to polling is shown once.

The messenger server 3 reads the contact list 72B associated with the ID of the user B, that is, ID_{B}, in response to the polling by the terminal 1B (step S1152). More specifically, first, the messenger server 3 refers to the notation table 70 and reads the pointer P_{B} associated with ID_{B}. The pointer P_{B} represents a storing position of the contact list 72B of the user B. The messenger server 3 refers to the contact list 72B according to the pointer P_{B}. In the contact list 72B, the IDs of the users whom the user B registers as his own contact list member are stored. As described above, in the present example, the ID of the user A, that is, ID_{A} is stored in the contact list 72B.

The messenger server 3 reads sequentially the IDs in the contact list 72B and searches the notation table 70 for notation data associated with each ID (step S1154). As a result, the messenger server 3 acquires notation data of the members in an online status among the contact list members of the user B. The user A is also included in the data of members.

Subsequently, the messenger server 3 transmits notation data searched from the notation table 70 to the terminal 1B such that it is associated with the ID of the contact list member (step S1156). If notation data of the contact list member is received (step S1104), the terminal 1B displays notation data in the 'online' region of the list member window 63 on the messenger screen 60 (step S1106). In such a manner, the area notation which represents the position of the terminal 1A of the user A is displayed on the terminal 1B of the user B who has registered the user A as the contact list member.

Referring to Fig. 10 again, after transmitting the request for notation creation (step S1010), the terminal 1A performs polling to the messenger server 3 (step S1011) . This polling corresponds to the polling (step S1102) shown in Fig. 11. As described above, the messenger server 3 transmits notation data of the contact list members (for example, the users B and C) for the user A in an online status to the terminal 1A, in response to the polling. Further, in the case in which the terminal 1 of the contact list member for the user A logs in to or logs out of the messenger server 3, the messenger server 3 transmits online information or offline information to the terminal 1A, in response to the polling by the terminal 1A. In online information, the ID of the user who logs in is included, and in offline information, the ID of the user who logs out is included.

The terminal 1A performs a contact list member status update process (step S1012) using received notation data, online information and offline information. If online information or offline information is received, the terminal 1A updates status data associated with the user ID which is included in online information or offline information. Status data is provided in the RAM 12 with respect to each of the contact list members. Status data is rewritten to data representing login in response to the receipt of online information and to data representing logout in response to the receipt of offline information. Further, when online information or offline information is not received, status data is not updated. In addition, the terminal 1A displays notation data ('DDD@home' or the like) in the online region or the offline region in the list member window 63 according (see Fig. 4) to status data of the contact list members. This corresponds to the step S1106 described above with respect to the terminal 1B.

The terminal 1A also performs the message process (step S1014). In this process, the terminal 1A checks whether or not an input of message data using the input device 20 is present. If input message data is confirmed, the terminal 1A transmits message data to the messenger server 3, together with the ID of the destination user. If message data is received from the terminal 1A, the messenger server 3 transmits message data to the terminal 1 of the destination user. This transmission may be performed in response to the polling (step S1011) by the terminal 1 of the destination user. At the step S1014, the terminal 1A checks whether or not message data transmitted from other terminals 1 was transferred from the messenger server 3. When the receipt of the message is confirmed, the terminal 1A displays message data in the messenger screen 60.

In addition, similar to the first embodiment, the terminal 1A performs a current area definition update process (step S1016) and a notation update process (step S1017) using current area definition data and notation data transmitted at the step S1068. Next, the terminal 1A acquires positioning data of the terminal 1A from the GPS satellite (step S1018) and determines whether or not a position to be represented by positioning data is within a current area which is determined by current area definition data stored in the RAM 12 (step S1020). If it is determined that the position to be represented by positioning data is within the current area (Yes at the step S1020) , the terminal 1A checks whether or not an end instruction is input (step S1022). In the case in which the input of the end instruction is not confirmed (No at the step S1022), the terminal 1A repeats the processes from the step S1011 to the step S1020.

When the terminal 1A moves outside the current area, it is determined that the position to be represented by positioning data is not within the current area (No at the step S1020). In this case, the process returns to the step s1010, and the request for notation creation is transmitted to the messenger server 3 again. Accordingly, the messenger server 3 performs the steps S1062 to S1068 again. In the step S1064, the move of the terminal 1A outside the area is reflected on area notation data of the user A. In the step S1066, a corresponding 'notation data' field of the notation table 70 is updated by notation data including a new area notation. In such a manner, the move of the terminal 1A outside the area is detected, and then area notation data is changed. In the case in which the position to be represented by positioning data is included in another registered area different from the previous area, at the step S1068, definition data of that area is transmitted to the terminal 1A and then current area definition data in the RAM 12 is updated (step s1016). Further, at the step S1068, notation data including a new area notation is also transmitted to the terminal 1A, and the terminal 1A updates the self notation 68 using notation data (step s1017).

When current area definition data is (0, 0, 0), it is also determined that the position to be represented by positioning data is not within the current area (No at the step S1020), then the process returns to the step s1010, and the request for notation creation is transmitted to the messenger server 3. As described above, current area definition data of (0, 0, 0) is generated when the area data set 52 including the position to be represented by positioning data is not detected. In this case, the messenger server 3 creates a string of characters of '(user registration name) @' as notation data of the user A.

Meanwhile, if the input of the end instruction is confirmed (Yes at the step s1022), the terminal 1A performs a logout process (step S1024). In this process, the terminal 1A transmits a logout request to the messenger server 3. In the logout process, the ID of the user is included. If the logout request is received, the messenger server 3 disconnects the terminal 1A from the server 3 and changes notation data associated with ID_{A} in the notation table 70 into NULL data. Next, in response to the polling by the terminal 1 of the user who has registered the user A as a contact list member, the messenger server 3 transmits offline information of the terminal 1A to that terminal 1.

In the present embodiment, similar to the first embodiment, since the user can grasp other user's residence from the area notation, convenience of the messenger service is improved. Further, the area table 50 is stored in a memory device provided outside the communication terminal 1, that is, the hard disk drive 9 of the area database 5, and the terminal 1 creates notation data using the area table 50. For this reason, even in the case in which one user uses multiple communication terminals 1 properly, area notation data is determined based on a common area table. The user does not need to create and update the area table for every terminal, and further the user does not need to consider a difference of terminals to be used. This point is also convenient for the user.

As described above, the present invention is described in detail based on the embodiments. However, the present invention is not limited to the above-mentioned embodiments. The present invention can be variously modified within a scope without departing from the subject matter.

In the above-mentioned embodiments, the GPS is used as the satellite positioning system and positioning data of the communication terminal 1 is acquired from the GPS satellite. However, the communication terminal 1 may acquire positioning data of the communication terminal 1 from a positioning satellite of another satellite positioning system. In addition, the communication terminal 1 may acquire its own position data using means other than the satellite positioning system. For example, if the communication terminal 1 is a cellular phone, the communication terminal 1 may acquire its own position data from a base station.

In the above-mentioned embodiments, notation data, for multiaddressing in which user registration name data is added to the area notation data, is transmitted to the communication terminal 1 as single data. However, user registration name data and area notation data may be separately transmitted to the terminal 1. Further, as regards the creation of notation data for multiaddressing, instead of a string of characters representing the registration name of the user, other data (for example, an image) denoting the user may be used.

In the above-mentioned embodiments, in the messenger screen 60, '@' is displayed between the user registration name and the area notation. However, in order to distinguish the user registration name and the area notation, other marks, for example, '/' or ',' may be used. Further, the area notation may be put in '()' and be displayed following the user registration name.

The communication terminal 1 may perform the contact list member status update process (step S712), the message process (step S714) and the current area definition data update process (step S716) in an arbitrary order.

When logged in to the messenger server 3, the communication terminal 1 may receive the area table 50 associated with the user ID from the messenger server 3 and store that in the RAM 12 or the storage unit 14. By using the area table 50, the terminal 1 can detect its own moves outside and inside the area. For example, while repetitively acquiring positioning data, the terminal 1 may search the area table 50 for the area data set including the position to be represented by positioning data. Next, when such an area data set is detected, the terminal 1 may transmit the request for notation creation to the messenger server 3. When the login authentication of the terminal 1 is successful, the messenger server 3 may access the area database 5, acquire the area table 50 associated with the user ID which is transmitted from the terminal 1, and reply with the acquired data to the same terminal 1. Further, it may be constructed such that the area table 50 is edited by operating the input device 20 of the terminal 1. In the logout process, the terminal 1 may transmit the area table 50 to the messenger server 3. In this case, the messenger server 3 updates the area table 50, in the area database 5 and which is associated with the user ID which is received from the terminal 1, with the area table 50 received from the terminal 1. Thus, the change of the area table 50 on the terminal 1 is reflected on the area database 5.

In the third embodiment, the messenger server 3 creates notation data; however, the communication terminal 1 may create notation data, like the second embodiment. Further, similar to the third embodiment, in the first embodiment, the messenger server 3 may store created notation data in the notation table 70. In the second embodiment, the messenger server 3 multiaddresses notation data to the terminals 1, but, alternatively, the messenger server 3 may transmit notation data to the terminal 1 in response to polling by the terminal 1.

## Claims

1. A messenger service system, comprising:
a plurality of communication terminals;
a messenger server that transmits message data, which is input to one of the communication terminals, to another of the communication terminals; and
a first storage that stores an area data set, having definition data and notation data of an area, in association with identification data,
wherein each communication terminal includes a position acquirer that acquires its own position data and a receiver that receives notation data of the area from the messenger server,
wherein the messenger server searches the first storage for an area data set associated with a first identification data when position data of a first communication terminal and the first identification data are received from the first communication terminal, and
wherein the messenger server transmits notation data of the area in the area data set to a second communication terminal when an area data set, having definition data which includes a position to be represented by the position data, is detected.

2. The messenger service system according to claim 1,
wherein the first communication terminal tries to login to the messenger server using the first identification data, according to an instruction input to the first communication terminal and, when the login is successful, the first communication terminal acquires position data of the first communication terminal and transmits acquired position data to the messenger server, together with the first identification data.

3. The messenger service system according to claim 1,
wherein when the area data set, having definition data which includes the position to be represented by position data, is detected, the messenger server transmits definition data in the area data set to the first communication terminal, and
wherein the first communication terminal repetitively acquires position data of the first communication terminal, and when a position data which represents a position other than an area to be defined by definition data received from the messenger server is acquired, the first communication terminal transmits position data to the messenger server, together with the first identification data.

4. The messenger service system according to claim 1,
wherein each communication terminal comprises a second storage that stores notation data of a user who operates a communication terminal, in association with the identification data,
wherein, when the area data set, having definition data which includes the position to be represented by position data, is detected, the messenger server reads user notation data associated with the first identification data from the second storage, creates data in which user notation data is added to area notation data in the detected area data set, and transmits created data to the second communication terminal, and
wherein the second communication terminal receives and displays created data.

5. The messenger service system according to claim 1,
wherein the respective communication terminals transmit the area data set and the identification data to the messenger server, in response to an input of the area data set to each of the communication terminals, and
wherein the messenger server stores the received area data set of each of the communication terminals in the first storage in association with the identification data received from the same communication terminal.

6. The messenger service system according to claim 1, further comprising:
a list storage that stores, in association with one identification data, at least one identification data list including at least one other identification data,
wherein each communication terminal tries to log in to the messenger server using the identification data, according to an instruction input to the communication terminal,
wherein the second communication terminal is a communication terminal which logs in to the messenger server using the identification data stored in the identification data list associated with the first identification data, and
wherein, when the area data set, having definition data which includes the position to be represented by position data, is detected, the messenger server refers to the identification data list associated with the first identification data, reads at least one identification data stored in the identification data list, and transmits notation data of the area in the area data set to the second communication terminal which logs in the messenger server using the read identification data.

7. The messenger service system according to claim 1,
wherein, after detecting the area data set, the messenger server transmits notation data of the area in the area data set to the second communication terminal, in response to polling by the second communication terminal.

8. The messenger service system according to claim 7, further comprising:
a list storage that stores, in association with one identification data, at least one identification data list including at least one other identification data,
wherein the second communication terminal transmits second identification data to the messenger server to perform the polling, and
wherein the messenger server searches in the identification data list associated with the second identification data for the first identification data in response to the polling, and, when the first identification data is detected, transmits notation data of the area to the second communication terminal.

9. A messenger server, provided in a messenger service system in which a plurality of communication terminals exchange messages with each other, the messenger server comprising:
a searcher that searches an area data set associated with a first identification data when position data of a first communication terminal and the first identification data are received from the first communication terminal; and
a transmitter that transmits notation data of an area in the area data set to a second communication terminal when an area data set, having definition data which includes a position to be represented by the position data, is detected,
wherein the messenger service system includes a first storage that stores an area data set, having definition data and notation data of an area, in association with the first identification data; and
wherein each communication terminal includes a position acquirer that acquires its own position data and a display that displays notation data when notation data of the area is received from the messenger server.

10. The messenger server according to claim 9,
wherein the transmitter transmits definition data in the area data set to the first communication terminal when an area data set, having definition data which includes a position to be represented by the position data, is detected.

11. The messenger server according to claim 9,
wherein the messenger service system further comprises a second storage that stores, in association with the identification data, notation data of the user who operates the communication terminal, and
wherein the transmitter that transmits notation data to the second communication terminal reads user notation data associated with the first identification data from the second storage, creates data in which user notation data is added to area notation data in the detected area data set, and transmits created data to the second communication terminal when an area data set, having definition data which includes a position to be represented by the position data, is detected.

12. The messenger server according to claim 9,
wherein the area data set is stored in the first storage in association with the identification data when the area data set and the identification data are received from the communication terminal.

13. A method of controlling a messenger service system which includes a plurality of communication terminals, a messenger server that transmits message data, input to one communication terminal, to another communication terminal, and a first storage that stores an area data set, including definition data and notation data of a predetermined area, in association with identification data, the method comprising:
searching the first storage for an area data set associated with a first identification data when position data of a first communication terminal and the first identification data are received from the first communication terminal; and
transmitting notation data of the area in the area data set to a second communication terminal when an area data set, having definition data which includes a position to be represented by the position data, is detected,
wherein each communication terminal includes a position acquirer that acquires its own position and a display that displays notation data when notation data of the area is received from the messenger server.

14. A program for controlling a messenger server, provided in a messenger service system in which a plurality of communication terminals exchange messages with each other, the program comprising:
a searching code segment that searches a first storage for an area data set associated with a first identification data when position data of a first communication terminal and the first identification data are received from a first communication terminal; and
a transmitting code segment that transmits notation data of an area in an area data set to a second communication terminal when an area data set, having definition data which includes a position to be represented by the position data, is detected,
wherein an area data set includes definition data and notation data of a predetermined area, and
wherein each communication terminal includes a position acquirer that acquires its own position data and a display that displays notation data of an area that includes its own position when notation data of the area is received from the messenger server.

15. A messenger service system, comprising:
a plurality of communication terminals;
a messenger server that transmits message data, which is input to one communication terminal, to another communication terminal; and
a first storage that stores an area data set, having definition data and notation data of an area, in association with identification data,
wherein each communication terminal includes a position acquirer that acquires its own position data, a display that displays notation data when notation data is received from the messenger server, and a second storage,
wherein a first communication terminal acquires its own position data, reads the area data set associated with a first identification data from the first storage, stores the area data set in the second storage, searches the second storage for an area data set having definition data which includes a position to be represented by its own position data, and transmits the first identification data and notation data of an area in the area data set to the messenger server when the area data set is detected in the second storage, and
wherein the messenger server receives the first identification data and the notation data of the area from the first communication terminal and transmits the first identification data and the notation data of the area to a second communication terminal.

16. The messenger service system according to claim 15,
wherein the first communication terminal tries to log in to the messenger server using the first identification data, according to an instruction input to the first communication terminal, and, when the login is successful, acquires its own position data.

17. The messenger service system according to claim 15,
wherein, after detecting the area data set, having definition data which includes the position to be represented by its own position data, the first communication terminal repetitively acquires its own position data, and, when the position data represents a position outside the area defined by definition data in the detected area data set, searches the second storage for the area data set having definition data which includes the position to be represented by acquired position data, and then, when the area data set is detected, transmits notation data of an area in the area data set to the messenger service system again, together with the first identification data, and
wherein the messenger server receives notation data of the area transmitted again and the first identification data from the first communication terminal and transmits them to the second communication terminal.

18. The messenger service system according to claim 15,
wherein each communication terminal further comprises a third storage that stores notation data of a user who operates the communication terminal, in association with the identification data,
wherein, when the area data set, having definition data which includes the position to be represented by its own position data, is detected, the first communication terminal reads user notation data associated with the first identification data from the third storage, creates data in which user notation data is added to area notation data in the detected area data set, and transmits created data to the messenger server,
wherein the messenger server transmits created data to the second communication terminal, and
wherein the second communication terminal receives and displays created data.

19. The messenger service system according to claim 15, further comprising:
a management server for managing data input and output to the first storage,
wherein each communication terminal transmits the area data set and the identification data to the management server in response to an input of the area data set to the communication terminal, and
wherein the management server stores the area data set received from the communication terminal in the first storage, in association with the identification data received from the same communication terminal.

20. The messenger service system according to claim 15, further comprising:
a list storage that stores, in association with one identification data, at least one identification data list including at least one other identification data,
wherein each communication terminal tries to login to the messenger server using the identification data in response to an input of an instruction to the communication terminal,
wherein the second communication terminal is a communication terminal which logs in to the messenger server using identification data stored in the identification data list associated with the firs identification data,
wherein, when notation data of the area and the first identification data are received from the first communication terminal, the messenger server refers to the identification data list associated with the first identification data, reads at least one identification data stored in the identification data list, and transmits notation data of the area in the area data set to the second communication terminal which logs in to the messenger server using the read identification data.

21. The messenger service system according to claim 15,
wherein, after receiving notation data of the area and the first identification data from the first communication terminal, the messenger server transmits notation data of the area received from the first communication terminal to the second communication terminal, in response to polling by the second communication terminal.

22. The messenger service system according to claim 21, further comprising:
a list storage that stores, in association with one identification data, at least one identification data list including at least one other identification data,
wherein the second communication terminal transmits second identification data from the messenger server to perform the polling,
wherein the messenger server searches the identification data list associated with the second identification data for the first identification data, in response to the polling, and, when the first identification data is detected, transmits notation data of the area received from the first communication terminal to the second communication terminal.

23. A method of controlling a messenger service system which includes a plurality of communication terminals, a messenger server that transmits message data, input to one communication terminal, to another communication terminal, and a first storage that stores an area data set, including definition data and notation data of a predetermined area, in association with identification data, the method comprising:
acquiring position data of a first communication terminal, reading the area data set associated with a first identification data from the first storage, and storing the area data set in the second storage;
searching the second storage for an area data set having definition data which includes a position to be represented by the position data of the first communication terminal;
transmitting the first identification data and notation data of the area in an area data set to the messenger server when the area data set is detected,
wherein the acquiring, the reading, the storing and the searching are performed by the first communication terminal;
wherein the messenger server receives notation data of the area and the first identification data from the first communication terminal and transmits the received notation data of the area and the first identification data to the second communication terminal, and
wherein each communication terminal includes a position acquirer that acquires its own position, a display that displays notation data when notation data of the area s received from the messenger server, and a second storage.
